# FASCICULE DE BREVET EUROPEEN

(11) **EP 3 330 124 B1**
(45) Date de publication et mention de la délivrance du brevet: **17.04.2019**
(21) Numéro de dépôt: 17204515.5
(22) Date de dépôt: 29.11.2017
(51) Int. Cl.: B60N 2/68, B60N 2/70, B60N 2/56

(54) **SIÈGE DE VÉHICULE ET ÉLÉMENT DE SIÈGE ÉQUIPÉ D'UN SYSTÈME DE VENTILATION COMPRENANT UN CONDUIT**
FAHRZEUGSITZ UND SITZELEMENT, DAS MIT EINEM BELÜFTUNGSSYSTEM AUSGESTATTET IST, DAS EINE LEITUNG UMFASST
VEHICLE SEAT AND SEAT ELEMENT PROVIDED WITH A VENTILATION SYSTEM COMPRISING A DUCT

(30) Priorité: 30.11.2016 FR 1661672
(43) Date de publication de la demande: 06.06.2018
(73) Titulaire: FAURECIA Sièges d'Automobile, 92000 Nanterre (FR)
(72) Inventeur: LONGATTE, Florent, 78120 Rambouillet (FR); DURIEZ, Didier, 91220 Le Plessis-Pâté (FR); ROBERT, Jacques, 91460 Marcoussis (FR)
(74) Mandataire: Cabinet Plasseraud

(56) Documents cités:
- DE-A1-102009 042 789
- DE-A1-102013 218 696
- US-A1- 2011 109 128
- US-A1- 2011 260 509

## Description

L'invention concerne les éléments de sièges de véhicule, notamment les dossiers ou les assises, les sièges de véhicule qui comportent de tels éléments et les procédés de fabrication de ces éléments.

Un véhicule comprend généralement plusieurs sièges reliés à un plancher du véhicule. Un siège du véhicule comprend habituellement deux éléments de siège distincts : une assise et un dossier. L'élément de siège comprend une structure porteuse et une matelassure. La structure porteuse est rigide et directement reliée au plancher. Elle a pour fonction d'assurer la stabilité mécanique de l'élément de siège. La matelassure est moelleuse et est disposée entre la structure porteuse et un utilisateur de l'élément de siège. Ainsi, la matelassure assure le confort de l'utilisateur. Elle est généralement recouverte d'une coiffe.

L'élément de siège peut également comprendre un système de ventilation en communication avec la matelassure. Le système de ventilation comprend au moins un ventilateur qui est apte à souffler ou à aspirer de l'air dans ou depuis un habitacle du véhicule et ce, à travers la coiffe et la matelassure. Pour ce faire, la matelassure comprend habituellement un creux dans lequel sont logés un ventilateur et un organe qui vient cloisonner le creux. Entre le ventilateur et l'organe est disposée une entretoise en tricot, aussi appelée « maille 3D ». C'est cette entretoise qui permet la circulation de l'air depuis le ventilateur vers la matelassure.

Toutefois, l'élément de siège est ainsi relativement complexe à fabriquer car il nécessite plusieurs étapes d'assemblage. En outre, l'entretoise en tricot engendre une résistance à l'air relativement importante, ce qui a pour effet de diminuer le débit d'air arrivant dans la matelassure par rapport à celui qui avait quitté le ventilateur.

Un objectif de l'invention est de pallier les deux inconvénients précités, à savoir fournir un élément de siège plus simple à fabriquer et plus efficace sur le plan de la circulation aéraulique.

Pour ce faire, on prévoit selon l'invention un élément de siège comprenant les caractéristiques de la revendication 1. Ainsi, le second organe a une forme symétrique et comprend deux branches distinctes qui se rejoignent en une extrémité et s'étendant de sorte qu'une zone centrale de la matelassure est en contact direct avec le premier organe ; lorsque l'élément de siège forme un dossier, la colonne vertébrale de l'utilisateur n'est pas disposée en regard du premier organe, qui a une forme non plane, ce qui accroît le confort de l'élément de siège. Le deuxième organe délimite principalement la forme du conduit et permet de conserver la majeure partie du débit d'air entre le ventilateur et la matelassure.

En outre, l'élément de siège est plus simple à fabriquer car il comprend moins de pièces que l'élément de siège de l'art antérieur.

Dans divers modes de réalisation de l'élément de siège selon l'invention, on peut éventuellement avoir recours en outre à l'une et/ou à l'autre des dispositions suivantes :
- au moins l'un parmi les premier et second organes comprend un matériau thermoformé ;
- on notera plus généralement que les premier et second organes peuvent comprendre le même matériau thermoformé qui peut notamment être un polyoléfine ou un non-tissé étanche présentant un compromis adéquate entre rigidité et souplesse ;
- le premier organe peut aussi comprendre un matériau différent du second organe, en effet, le premier organe peut comprendre par exemple un matériau non-tissé étanche thermoformé tandis que le second organe comprend un matériau polyoléfine ;
- les premier et second organes comprennent respectivement deux parois en regards délimitant le conduit, la paroi du premier organe est plane et la paroi du second organe présente une forme non plane ; le premier organe est ainsi plus simple à conformer, seul le second organe devant être conformé selon la forme que l'on souhaite donner au conduit ;
- le second organe comprend sur sa périphérie un bord tombé fixé directement à la paroi du premier organe ; ce bord tombé, qui est plan, permet de fixer directement tout le pourtour périphérique du second organe au premier organe de façon à délimiter le conduit et assurer l'étanchéité entre les deux organes ;
- le premier organe comprend un logement accueillant le ventilateur ;
- le second organe comprend une pluralité d'orifices formant des entrées et/ou des sorties d'air ;
- la pluralité d'orifices est disposée symétriquement ; le comportement aéraulique du conduit est donc facile à modéliser ;
- le second organe a une forme générale de « C » ou de « U » ;
- l'élément de siège forme un dossier ;
- l'élément de siège forme une assise.

On prévoit en outre selon l'invention un siège comportant au moins un élément de siège tel que décrit ci-dessus. Le siège est de préférence conformé pour être un siège de véhicule.

On prévoit enfin selon l'invention un procédé de fabrication d'un élément de siège tel que susmentionné, comprenant au moins les étapes suivantes :
- on forme les premier et second organes et on les fixe l'un à l'autre,
- on positionne, dans un moule pour réaliser la matelassure, les premier et second organes, et
- on coule un matériau destiné à former la matelassure, dans le moule autour des premier et second organes.

On notera que lorsque les premier et second organes comprennent chacun un matériau thermoformé, par exemple un thermoplastique, ils peuvent être formés à partir d'un procédé de thermoformage du type « twin-sheet » de deux feuilles. Dans ce cas, les premier et second organes sont formés et fixés l'un à l'autre simultanément. Les premier et second organes peuvent ainsi être venus de matière. Les premier et second organes peuvent aussi être collés l'un à l'autre.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit d'un mode de réalisation, donné à titre d'exemple non limitatif, en référence aux figures annexées suivantes :
- la figure 1 illustre un élément de siège selon l'art antérieur,
- la figure 2 représente en perspective un système de ventilation selon un mode de réalisation de l'invention,
- la figure 3 est une vue en coupe selon la ligne III-III dans laquelle le système de ventilation fait partie d'un élément de siège selon l'invention, et
- les figures 4 et 5 illustrent en perspective respectivement un premier organe et un second organe du système de ventilation.

Par souci de clarté, seuls les éléments utiles à la compréhension des modes de réalisation décrits ont été représentés et seront détaillés.

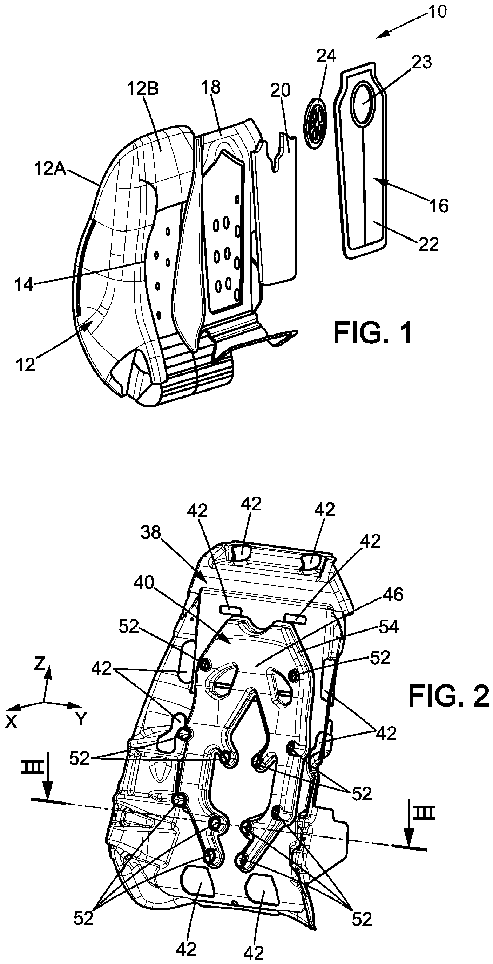

On a représenté à la figure 1 un élément de siège 10 pour un siège de véhicule automobile selon l'art antérieur. L'élément de siège est un dossier.

L'élément de siège 10 comprend une matelassure 12 qui comporte une face avant 12A destinée à être en contact avec un dos d'un utilisateur et une face arrière 12B. La face arrière 12B de la matelassure 12 comprend un creux 14 qui permet de loger le système de ventilation 16. L'élément de siège comprend en outre une coiffe, non représentée, perméable à l'air, qui recouvre la matelassure 12

Le système de ventilation 16 comporte un renfort structurel 18, qui a pour fonction de réduire les risques d'usure de la matelasse 12 liés au frottement de cette dernière sur une structure porteuse, non représentée, une cloison étanche 22, qui ferme le creux 14, et une entretoise en tricot 20 disposée entre le renfort structurel 18 et la cloison 22. Le renfort structurel 18 comprend une pluralité d'orifices 19 formant des passages d'air entre l'entretoise en tricot 20 et la matelassure 12. La cloison 22 comprend un orifice 23 permettant de loger un ventilateur non représenté, et qui est positionné grâce à une pièce plastique 24 fixée à la cloison 22. Ainsi, le ventilateur est en communication d'air avec la matelassure 12 par l'intermédiaire de l'entretoise en tricot 20. Ainsi, le ventilateur peut insuffler de l'air dans un habitacle comprenant l'élément de siège 10 ou a contrario aspirer de l'air à travers la coiffe et ce, afin d'améliorer le confort d'un utilisateur. Le renfort structurel 18 et la cloison 22 sont destinés à être en contact avec la structure porteuse. Selon l'art antérieur, c'est l'entretoise en tricot, qui présente une résistance à l'air importante, qui assure la communication aéraulique entre le ventilateur et la matelassure 12. Cela entraîne une perte de charge importante.

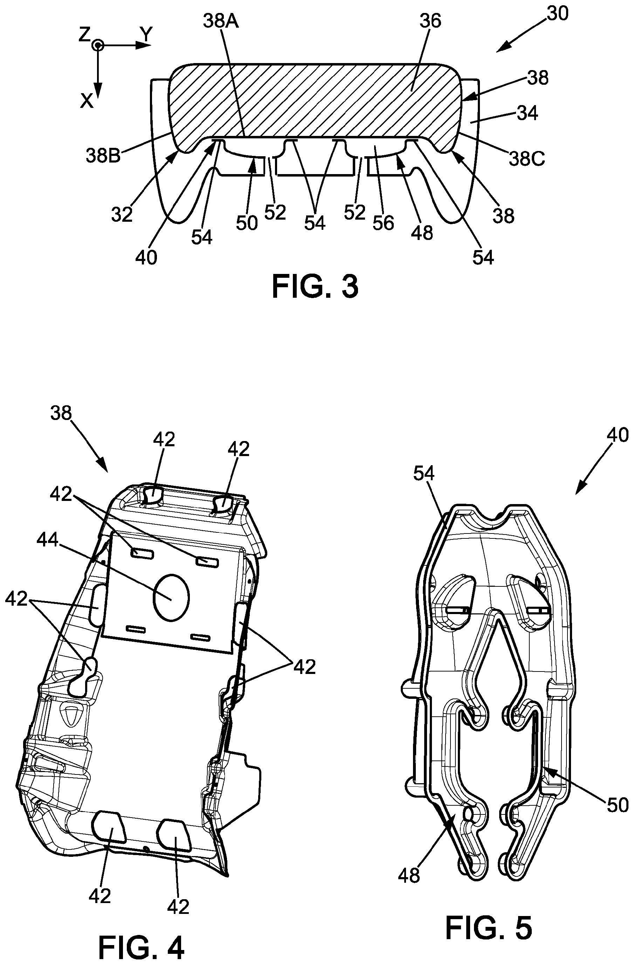

On va maintenant décrire, à l'aide des figures 2 à 5, un élément de siège 30 selon un mode de réalisation de l'invention. L'élément de siège 30, notamment visible en figure 3, est ici un dossier d'un siège d'un véhicule. On a représenté à la figure 2 un système de ventilation 32 selon l'invention. Le système de ventilation 32 se substitue au système de ventilation 16 décrit ci-dessus.

L'élément de siège 30, visible à la figure 3, comprend donc le système de ventilation 32, une matelassure 34 et une structure porteuse 36. On a représenté sur la figure 3 une direction (X) qui va de l'arrière vers l'avant du véhicule lorsque l'élément de siège 30 est disposé dans le véhicule. On a aussi représenté une direction verticale (Z), qui va du bas vers le haut, et une direction (Y) perpendiculaire à ces deux directions (X) et (Z), et qui va de la droite vers la gauche du véhicule. On notera que le plan (XZ) est un plan de symétrie pour l'élément de siège 30.

La matelassure 34 est moelleuse et configurée pour servir d'appui à un utilisateur. La structure porteuse 36 confère à l'élément de siège 30 le maintien structurel nécessaire. En outre, la structure porteuse 36 est apte à être reliée à un plancher d'habitacle du véhicule, par exemple par l'intermédiaire de glissières. La structure porteuse 36 peut être de tout type et peut notamment comprendre une armature métallique.

Le système de ventilation 30 comprend un premier organe 38, aussi visible à la figure 4, et un second organe 40, également visible à la figure 5.

Comme on le voit sur la figure 3, le premier organe 38 est disposé entre la matelassure 34 et la structure porteuse 36. Il est de plus posé sur la structure porteuse 36 et maintenue contre celle-ci grâce à une coiffe, non représentée, et porte directement la matelassure 34. Ainsi, le premier organe 38 interface la matelassure 34 et la structure porteuse 36. Pour ce faire, le premier organe 38 a des dimensions adaptées pour empêcher tout contact direct entre la matelassure 34 et la structure porteuse 36. Ainsi, le premier organe 38 protège la matelassure 34 vis-à-vis de la structure porteuse 36. Le second organe 40 est fixé à une face du premier organe 38, opposée à celle qui est en contact avec la structure porteuse 36. Ainsi, le second organe 40 est en contact direct avec la matelassure 34 et le premier organe 38, mais pas avec la structure porteuse 36.

Le premier organe 38 comporte une paroi principale 38A et deux parois latérales 38B, 38C. La paroi principale 38A est sensiblement plane et s'étend dans le plan (YZ). Les parois latérales 38B, 36C s'étendent parallèlement et symétriquement depuis la paroi principale 38A dans le plan (XZ). De plus, comme on peut le voir sur la figure 4, le premier organe 38 comprend plusieurs logements 42 qui se présentent sous la forme d'orifices traversant et qui ont pour fonction de loger d'autres systèmes de l'élément de siège 30 (par exemple un appui-tête ou un système de massage). En outre, le premier organe 38 comprend un logement 44 qui se présente sous la forme d'un orifice circulaire traversant et qui a pour fonction d'accueillir un ventilateur 46 (dont l'emplacement est matérialisé en figure 2).

Le second organe 40 présente une forme symétrique, par rapport au plan (XZ), et s'étend principalement dans le plan (YZ). Il a une forme tridimensionnelle non plane. De plus, il a une forme générale de « C » ou de « U ». Il comprend une branche gauche 48 et une branche droite 50 qui s'étendent longitudinalement selon la direction (Z). Ces deux branches 48 et 50 se rejoignent en une de leurs extrémités, en l'occurrence l'extrémité supérieure selon la direction verticale (Z), et forment ainsi chacune une branche distincte du « C » ou du « U ». De plus, le second organe 40 comprend une pluralité d'orifices traversant 52 disposés symétriquement sur les branches gauche 48 et droite 50. En outre, sur tout son pourtour périphérique, en référence au plan (YZ), le second organe 40 comprend un bord tombé 54. Ce bord tombé 54 est plan de façon à remplir la fonction d'une surface de fixation au premier organe 38 comme décrit ci-après.

C'est pourquoi, comme illustré aux figures 2 et 3, lorsque le système de ventilation 32 est assemblé, les premier 38 et second 40 organes sont fixés l'un à l'autre de sorte que le second organe est disposé en vis-à-vis du ventilateur 46 et que le bord tombé 54 du second organe 40 est directement fixé à la paroi principale 38A du premier organe 38. Le pourtour périphérique du second organe 40 est donc en contact direct avec la paroi principale 38A du premier organe 38. Un espace libre compris entre le bord tombé 54 du second organe et deux faces en regards des premier 38 et second 40 organes définit un conduit 56 qui met en communication d'air le ventilateur 46 et la matelassure 34, par l'intermédiaire des orifices traversant 52 du second organe 40. On notera, par ailleurs, que la matelassure 34 comprend des perforations disposées en vis-à-vis des orifices traversant 52 du second organe 40 afin de mettre en communication d'air l'habitacle et le ventilateur 46.

Ainsi, le conduit 56 délimite un passage d'air mettant en communication la matelassure 34 et le ventilateur 46. Le conduit 56 comprend le premier organe 38 et le second organe 40. Une face du premier organe 38 qui participe à délimiter le conduit 56 est plane. Une face du second organe 40, qui participe à délimiter le conduit 56 a une forme non plane, et confère sa forme au conduit 56. C'est donc le second organe 40 qui est conformé selon la forme que l'on souhaite donner au conduit 56.

De plus, comme illustré en figures 2 et 3, les branches gauche 48 et droite 50 s'étendent de sorte qu'une zone centrale de la matelassure 34 est en contact direct avec la paroi principale 38A, plane, du premier organe 38. Ainsi, une colonne vertébrale de l'utilisateur ne risque pas de ressentir pas le second organe 40 qui a une forme non plane, ce qui permet d'améliorer le confort de celui-ci.

En outre, comme on le voit sur la figure 2, les branches gauche 48 et droite 50 du second organe 38 ont une section transversale non constante et donc de dimension variable. Cette section est plus importante à proximité du ventilateur 46 et décroit progressivement en fonction du nombre des orifices 52 de leurs positions et dimensions respectives. Cette variation de section est optimisée sur le plan aéraulique de façon à ce que la vitesse de déplacement de l'air le long du conduit 56 est sensiblement uniforme.

On notera par ailleurs que le ventilateur peut être utilisé pour souffler de l'air dans l'habitacle du véhicule à travers la matelassure 34 ou au contraire pour aspirer de l'air. Dans le premier cas, les orifices 52 forment une sortie d'air du système de ventilation 30. Dans le second cas, les orifices 52 forment une entrée d'air du système de ventilation 30.

De préférence, les premier 38 et second 40 organes comprennent le même matériau, en l'occurrence, un matériau thermoformé qui est avantageusement un polyoléfine ou un non-tissé étanche suffisamment rigide

Alternativement, les premier 38 et second 40 organes comprennent deux matériaux différents. Le premier organe 38 peut notamment comprendre un matériau non-tissé ou une toile étanche thermoformée.

On va maintenant décrire un procédé de fabrication du système de ventilation 30.

D'abord, on forme les premier 38 et second 40 organes et on les fixe l'un à l'autre. Lorsque les premier 38 et second organes 40 comprennent un même matériau thermoplastique, ces derniers sont formés et assemblés simultanément, par exemple par un procédé connu sous le nom de « twin-sheet ». Pour ce faire, on prévoit deux feuilles en matériau thermoplastique que l'on conforme selon le procédé précité. Sinon, on forme les premier 38 et second 40 organes séparément et on les fixe l'un à l'autre par tous moyens. Par exemple, les premier 38 et second 40 organes sont fixés via un procédé de collage, un procédé d'assemblage par thermofusion, par soudure par ultrasons ou par couture.

Ensuite, on dispose les premier 38 et second 40 organes dans un moule permettant la réalisation de la matelassure 34 en mousse.

Puis, on coule, dans le moule, une mousse sous forme liquide, destinée à former la matelassure 34, autour des premier 38 et second 40 organes. On laisse expanser la mousse jusqu'à ce que la matelassure 34 soit formée.

Ensuite, on assemble la matelassure 34 à la structure porteuse 36.

Bien entendu, on pourra apporter à l'invention de nombreuses variantes sans sortir du cadre de celle-ci.

L'élément de siège 30 pourra notamment être une assise.

Le second organe 40 peut avoir toute forme.

Les premier 38 et second 40 organes peuvent être formés en une seule pièce. Les premier 38 et second 40 organes peuvent être venus de matière.

## Revendications

1. Elément de siège (30) comprenant une structure porteuse (36), une matelassure (34) configurée pour servir d'appui à un utilisateur et un système de ventilation (32) comprenant au moins un ventilateur (46) et un conduit (56) délimitant un passage d'air mettant en communication le ventilateur (46) et la matelassure (34), **caractérisé en ce que** le conduit (56) comprend un premier organe (38) et un second organe (40) fixés l'un à l'autre, le premier organe (38) étant disposé entre la structure porteuse (36) et la matelassure (34), le second organe (40) ayant une forme symétrique et comprenant deux branches (48, 50) distinctes qui se rejoignent en une extrémité et s'étendant de sorte qu'une zone centrale de la matelassure (34) est en contact direct avec le premier organe (38).

2. Elément de siège (30) selon la revendication précédente, dans lequel au moins l'un parmi les premier (38) et second (40) organes comprend un matériau thermoformé et/ou un matériau polyoléfine et/ou un non-tissé étanche.

3. Elément de siège (30) selon l'une quelconque des revendications précédentes, dans lequel les premier (38) et second (40) organes comprennent respectivement deux parois en regards délimitant le conduit (56), la paroi (38A) du premier organe (38) est plane et la paroi du second organe (40) présente une forme non plane.

4. Elément de siège (30) selon l'une quelconque des revendications précédentes, dans lequel le premier organe (38) comprend un logement (44) accueillant le ventilateur (46) .

5. Elément de siège (30) selon l'une quelconque des revendications précédentes, dans lequel le second organe (40) comprend une pluralité d'orifices (52) formant des entrées et/ou des sorties d'air.

6. Elément de siège (30) selon l'une quelconque des revendications précédentes, dans lequel le second organe (40) a une forme générale de « C » ou de « U ».

7. Elément de siège (30) selon l'une quelconque des revendications précédentes, formant un dossier.

8. Siège comprenant un élément de siège (30) selon l'une quelconque des revendications précédentes.

9. Procédé de fabrication d'un élément de siège (30) selon l'une quelconque des revendications 1 à 7 comprenant au moins les étapes suivantes :
- on forme les premier (38) et second (40) organes et on les fixe l'un à l'autre,
- on positionne, dans un moule, les premier (38) et second (40) organes, et
- on coule un matériau sous forme de mousse liquide destiné à former la matelassure (34), dans le moule autour des premier (38) et second (40) organes.

## Patentansprüche

1. Sitzelement (30), aufweisend eine Trägerstruktur (36), eine Polsterung (34), die konfiguriert ist, einem Benutzer als Stütze zu dienen, und ein Belüftungssystem (32), das mindestens ein Gebläse (46) und eine Leitung (56) aufweist, die einen das Gebläse (46) und die Polsterung (34) miteinander verbindenden Luftkanal begrenzt, **dadurch gekennzeichnet, dass** die Leitung (56) ein erstes Teil (38) und ein zweites Teil (40) aufweist, die aneinander befestigt sind, wobei das erste Teil (38) zwischen der Trägerstruktur (36) und der Polsterung (34) angeordnet ist, das zweite Teil (40) eine symmetrische Form hat und zwei separate Schenkel (48, 50) aufweist, die sich in einem Ende treffen und sich derart erstrecken, dass eine zentrale Zone der Polsterung (34) in direktem Kontakt mit dem ersten Teil (38) ist.

2. Sitzelement (30) nach dem vorstehenden Anspruch, in welchem das erste (38) und/oder zweite (40) Teil ein warmgeformtes Material und/oder ein Polyolefin-Material und/oder ein dichtes Vlies aufweist.

3. Sitzelement (30) nach einem der vorstehenden Ansprüche, in welchem das erste (38) und zweite Teil (40) jeweils zwei sich gegenüberliegende Wände aufweisen, die die Leitung (56) begrenzen, wobei die Wand (38A) des ersten Teils (38) flach ist und die Wand des zweiten Teils (40) eine nicht flache Form hat.

4. Sitzelement (30) nach einem der vorstehenden Ansprüche, in welchem das erste Teil (38) eine Aufnahme (44) aufweist, in der das Gebläse (46) untergebracht ist.

5. Sitzelement (30) nach einem der vorstehenden Ansprüche, in welchem das zweite Teil (40) mehrere Öffnungen (52) aufweist, die Lufteinlässe und/oder Luftauslässe bilden.

6. Sitzelement (30) nach einem der vorstehenden Ansprüche, in welchem das zweite Teil (40) eine allgemeine "C"- oder "U"-Form hat.

7. Sitzelement (30) nach einem der vorstehenden Ansprüche, das eine Rückenlehne bildet.

8. Sitz aufweisend ein Sitzelement (30) nach einem der vorstehenden Ansprüche.

9. Verfahren zur Herstellung eines Sitzelements (30) nach einem der Ansprüche 1 bis 7, aufweisend mindestens die folgenden Schritte:
- Herstellen des ersten (38) und zweiten (40) Teils und Befestigen des einen an das andere,
- Anordnen des ersten (38) und zweiten (40) Teils in einem Formwerkzeug, und
- Gießen eines Materials in Form eines Flüssigkeitsschaums, das zur Herstellung der Polsterung (34) bestimmt ist, in das Formwerkzeug um das erste (38) und zweite (40) Teil herum.

## Claims

1. Seat element (30) comprising a supporting structure (36), padding (34) configured to serve as a support for a user, and a ventilation system (32) comprising at least one fan (46) and a duct (56) defining an air passageway placing the fan (46) and the padding (34) in communication, **characterized in that** the duct (56) comprises a first member (38) and a second member (40) fixed to one another, the first member (38) being arranged between the supporting structure (36) and the padding (34), the second member (40) having a symmetrical shape and comprising two distinct arms (48, 50) which join together at one end and extend such that a central area of the padding (34) is in direct contact with the first member (38) .

2. Seat element (30) according to the preceding claim, wherein at least one among the first (38) and second (40) members comprises a thermoformed material and/or a polyolefin material and/or a fluidtight non-woven material.

3. Seat element (30) according to any one of the preceding claims, wherein the first (38) and second (40) members respectively comprise two facing walls defining the duct (56), the wall (38A) of the first member (38) is planar and the wall of the second member (40) has a non-planar shape.

4. Seat element (30) according to any one of the preceding claims, wherein the first member (38) comprises a housing (44) accommodating the fan (46).

5. Seat element (30) according to any one of the preceding claims, wherein the second member (40) comprises a plurality of orifices (52) forming air inlets and/or outlets.

6. Seat element (30) according to any one of the preceding claims, wherein the second member (40) has a general "C" or "U" shape.

7. Seat element (30) according to any one of the preceding claims, forming a backrest.

8. Seat comprising a seat element (30) according to any one of the preceding claims.

9. Method for manufacturing a seat element (30) according to any one of claims 1 to 7, comprising at least the following steps:
- the first (38) and second (40) members are formed and fixed to one another,
- the first (38) and second (40) members are positioned in a mold, and
- a material in the form of liquid foam intended for forming the padding (34) is poured into the mold, around the first (38) and second (40) members.
